# EUROPÄISCHE PATENTSCHRIFT

(11) **EP 2 268 528 B1**
(45) Veröffentlichungstag und Bekanntmachung des Hinweises auf die Patenterteilung: **14.08.2013**
(21) Anmeldenummer: 09720817.7
(22) Anmeldetag: 12.03.2009
(51) Int. Cl.: B62D 3/12, B60D 1/62

(54) **VERFAHREN UND SYSTEM ZUM ERKENNEN DES KONTAKTIERUNGSZUSTANDES VON STECKERN**
METHOD AND SYSTEM FOR RECOGNISING THE STATE OF CONNECTION OF CONNECTORS
PROCÉDÉ ET SYSTÈME DE RECONNAISSANCE DE L'ÉTAT DE CONNEXION DE FICHES ÉLECTRONIQUES

(30) Priorität: 13.03.2008 DE 102008014573
(43) Veröffentlichungstag der Anmeldung: 05.01.2011
(73) Patentinhaber: Jost-Werke GmbH, 63263 Neu-Isenburg (DE)
(72) Erfinder: ALGÜERA, José Manuel, 63739 Aschaffenburg (DE); EIERMANN, Michael, 64319 Pfungstadt (DE)
(74) Vertreter: Mehler Achler
(86) Internationale Anmeldenummer: PCT/EP2009/052941
(87) Internationale Veröffentlichungsnummer: WO 2009/112555

(56) Entgegenhaltungen:
- EP-A- 1 580 043
- DE-A-102004 047 492
- DE-A-102007 017 659
- GB-A- 2 425 760
- US-A- 5 421 600
- US-A- 5 477 207

## Beschreibung

Die Erfindung betrifft ein System zum Erkennen des Kontaktierungszustandes zwischen einer ersten Steckerhälfte eines Zugfahrzeugs und einer zweiten Steckerhälfte eines Anhängerfahrzeugs gemäß den im Oberbegriff des Anspruchs 1 stehenden Merkmalen.

Unter einem Zugfahrzeug wird insbesondere eine Sattelzugmaschine und unter einem Anhängerfahrzeug ein Sattelauflieger verstanden. Die Steckerhälften dienen dazu, die Versorgungsleitungen von Zugfahrzeug und Anhängerfahrzeug zu verbinden, über welche das Anhängerfahrzeug mit Elektrizität und Druckluft, insbesondere für den pneumatischen Bremskreislauf versorgt wird. Unmittelbar nach dem Verbinden der Versorgungsleitungen strömt die Druckluft von dem Zugfahrzeug in den pneumatischen Bremskreislauf bis zum Erreichen eines vorgesehenen Druckniveaus. Erst nach Erreichen eines vorgegebenen Druckniveaus, welcher von einem Drucksensor erfasst wird, lassen sich die Bremsen des Anhängerfahrzeugs lösen. Ein vorstehend beschriebenes Verfahren und ein entsprechendes Energieübertragungssystem sind beispielsweise der DE 10 2004 047 492 A1 zu entnehmen.

Das bekannte Energieübertragungssystem der DE 10 2004 047 492 A1 dient dazu, das Steckkupplungssystem zu entlasten, indem die Energie aus dem Energieversorgungsstrang in den Energieverteilungsstrang lediglich geregelt und deshalb nur temporär übertragen wird. Dadurch wiederum werden die Steckerhälften auch nur temporär mit einem Stromfluss oder mit Druckluft beaufschlagt, wodurch deren Verschleiß erheblich gemindert wird. Die Regelung des Energieübertragungssystems findet ohne Eingreifen des Fahrers statt. Ebenso wenig erhält der Fahrer Informationen über die funktionsbereite Kontaktierung der Steckerhälften, so dass er in der Regel das Fahrzeug verlassen muss, um sich vom ordnungsgemäßen Kontakt der Steckerhälften durch Inaugenscheinnahme zu vergewissern.

Einen gattungsgemäßen Stand der Technik bildet die EP 1 580 043 A1 mit einer Wegfahrverhinderung für ein Zugfahrzeug und ein Anhängegerät, wobei das Anhängegerät über eine elektronische und/oder hydraulische und/oder pneumatische Verbindungsleitung an das Zugfahrzeug anschließbar ist. Mithilfe eines druckabhängigen Sensors im Bereich der hydraulischen oder pneumatischen Versorgungsleitung soll ein Systemdruck bzw. Systemfluss detektiert werden. Solange ein voreinstellbarer Systemdruck bzw. Systemfluss vorliegt bzw. detektiert wird, kann dann ein entsprechendes Signal erzeugt werden. Die Wegfahrverhinderung hat sich jedoch als unzureichend gezeigt, um den ordnungsgemäßen Kontaktierungszustand der Steckerhälften während des Fahrbetriebes zu erfassen. Die bekannte Vorrichtung ist insbesondere nicht in der Lage zu unterscheiden, ob ein Druckabfall im Bremskreis des Anhängegerätes aus Bremsungen bei Bergabfahrten oder einem undichten Kontakt der Steckerhälften resultiert. Einen weiteren Nachteil stellt auch im Hinblick auf den Kontaktierungszustand der Steckerhälften die große Anzahl der Einzelstecker dar, welche an unterschiedlichen Positionen des Zugfahrzeugs angreifen und daher optisch mit einem Blick nicht zu erfassen sind.

Demzufolge liegt der Erfindung die Aufgabe zugrunde, ein System bereitzustellen, welches eine optische Kontrolle der ordnungsgemäßen Kontaktierung der Steckerhälften entbehrlich macht und auch während des Fahrbetriebes zuverlässig funktioniert.

Die Aufhabe wird erfindungsgemäß durch ein System mit den im kennzeichnenden Teil des Anspruchs 1 stehenden Merkmalen gelöst Die Signaleinrichtung kann dabei den Kontaktierungszustand unmittelbar anzeigen oder dem Fahrer beispielsweise das Durchführen weiterführender Prozessschritte anbieten, wie das Einfahren der Stützwinden.

Das Bereitstellen des Druckniveaus auf dem Anhängerfahrzeug wird erfasst, um auf eine einwandfreie Verbindung der Steckerhälften zu schließen. Für den Fall, dass die Steckerhälften nicht in Wirkeingriff gelangen, zum Beispiel weil eine der Steckerhälften beschädigt ist, bleibt das Erreichen des vorgegebenen Druckniveaus aus.

Das erfindungsgemäße System umfasst ein an dem Zugfahrzeug angeordnetes und mit dem Anhängersteuergerät verbundenes Steuergerät, welches das elektronische Signal verarbeitet, und eine Signaleinrichtung, weiche dem Fahrer den Kontsktierungszustand anzeigt.

Gemäß einer vorteilaften Ausführugsform ist das Anhängersteuergerät und/oder das Zugfahrzeugseitige Steuergerät ein Bauelement des elektronischen Bremssystems (EBS) des Gliederzugs. Die Abfrage des Druckniveaus auf dem Anhängerfahrzeug erfolgt bei modernen Fahrzeugen in der Regel über das elektronische Bremssystem.

Das Anhängersteuergerät stellt das elektronische Signal auf den Datenbus, wobei das über den Datenbus übertragene elektronische Signal von dem Steuergerät am Zugfahrzeug abgreifbar ist. Über den Datenbus wird unter anderem das Bremsdrucksignal elektronisch zum Anhängerfahrzeug übermittelt. Bei dem Datenbus handelt es sich insbesondere um einen CAN-Bus.

Das Steuergerät des Zugfahrzeugs vergleicht das eingehende elektronische Signal des Anhängersteuergerätes mit dem eingespeisten Bremsdrucksignal. Hierdurch wird eine erhöhte Betriebssicherheit erreicht, da nicht nur der Druckaufbau des Bremsdrucks sondern auch der Datenbus mit den dazugehörigen Steuergeräten und die ordnungsgemäße Kontaktierung der Pole des Datenbusses in die Überprüfung eingeschlossen sind.

An der ersten und zweiten Steckerhälfte sind Kontakte zur Übertragung des Datenbus-Signals vorgesehen. Derzeit existieren bei Zugfahrzeugen und Sattelaufliegern 7polige Steckerhälften nach ISO 7638 als vorgeschriebener Standard, bei denen die Pole 1 bis 5 zur Energieübertragung und für eine Warnleuchtenansteuerung belegt sind. Die zwei weiteren Pole sind für die Übertragung des Datenbus-signals nach ISO 11992 vorgesehen.

Sofern ein automatisches Kupplungssystem für Sattelzüge zum Einsatz kommt, sollte die erste Steckerhälfte unmittelbar unterhalb der Einfahröffnung einer Sattelkupplung angeordnet sein. Die zweite Steckerhälfte kann an einem schwenkbar um einen Königszapfen gelagerten Ausrichtkeil bereitgehalten sein, wobei die äußere Kontur des Ausrichtkeils komplementär zu der Einfahröffnung einer Sattelkupplung ausgebildet ist. Beim Aufsatteln des Sattelaufliegers gelangen zeitgleich die Steckerhälften von Zugfahrzeug und Auflieger in Wirkeingriff miteinander. Dieses geschieht in einem von außen kaum einsehbaren Bereich unterhalb der Einfahröffnung der Sattelkupplung. Aus diesem Grund ist der Einsatz des erfindungsgemäßen Systems bei Sattelzügen mit einem automatischen Kupplungssystem besonders vorteilhaft, da die bisher vorgeschriebene Sichtkontrolle aufgrund der unzugänglichen Einbaulage kaum durchzuführen ist. Sobald die Steckerhälften von Zugfahrzeug und Anhängerfahrzeug miteinander verbunden sind, wird das Druckniveau auf dem Auflieger über den Drucksensor ausgelesen und an das Anhängersteuergerät weitergegeben. Das Aufliegersteuergerät stellt ein entsprechendes Signal auf den Datenbus, welches von dem zugfahrzeugseitigen Steuergerät ausgelesen und als vorhandenes Druckniveau am Auflieger identifiziert wird.

Vorzugsweise ist die Signaleinrichtung im Fahrerhaus angeordnet. Die Signaleinrichtung gibt die Information über eine ordnungsgemäße Kontaktierung der Steckerhälften an den Fahrer weiter, ohne dass dieser das Fahrerhaus verlassen muss.

Zum besseren Verständnis wird die Erfindung nachfolgend anhand von zwei Figuren näher erläutert. Es zeigen die:
- **Fig. 1:**: eine Seitenansicht auf einen Sattelzug mit einem Zugfahrzeug und einem Anhängerfahrzeug sowie
- **Fig. 2:**: einen schematischen Funktionsplan wesentlicher Komponenten des erfindungsgemäßen Systems.

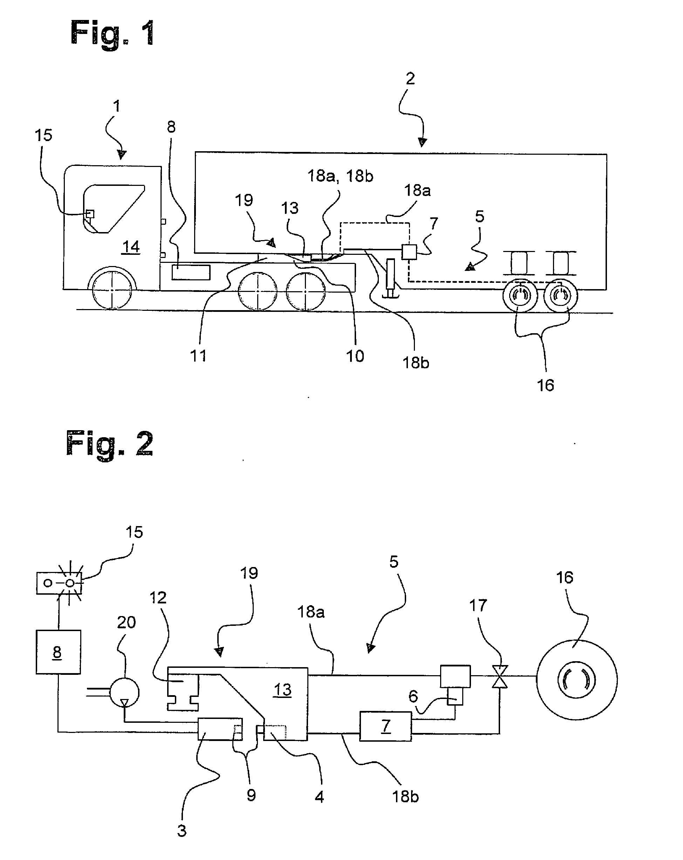

Die Figur 1 zeigt in einer Seitenansicht ein Zugfahrzeug 1 mit einem daran mechanisch verbundenen Anhängerfahrzeug 2 in Form eines Sattelaufliegers. Zum Ankuppeln des Sattelaufliegers 2 fährt das Zugfahrzeug 1 rückwärts gegen den stehenden Sattelauflieger 2, so dass ein an der Unterseite des Sattelaufliegers 2 angebrachter Königszapfen 12 (siehe Figur 2) zunächst in eine konisch zulaufende Einfahröffnung 10 einer Sattelkupplung 11 gelangt und dort zwangsgeführt bis in seine Endposition innerhalb der Sattelkupplung 11 geführt wird.

Die Übertragung von Energie- und Steuersignalen erfolgt nicht wie üblich über Spiralkabel des Zugfahrzeugs 1 zu dem Sattelauflieger 2, sondern über ein Kupplungssystem 19.

Das Kupplungssystem 19 umfasst seitens des Zugfahrzeugs 1 eine unterhalb der Einfahröffnung 10 ortsfest angeordnete erste Steckerhälfte 3 mit Kontakten 9, die neben einer nicht weiter gezeigten Stromquelle an einen Kompressor 20 zur Druckluftversorgung angeschlossen sind. Darüber hinaus ist die erste Steckerhälfte 3 mit einem Steuergerät 8 des Zugfahrzeugs 1 verbunden, welches über einen Datenbus mit den auf dem Sattelauflieger 2 befindlichen Komponenten kommuniziert und Bestandteil des elektronischen Bremssystems ist.

Das Steuergerät 8 ist an eine im Fahrerhaus 14 des Zugfahrzeugs 1 angeordnete Signaleinrichtung 15 angeschlossen, welche den Fahrer über eine ordnungsgemäße Verbindung der ersten und zweiten Steckerhälfte 3, 4 informiert.

Das Kupplungssystem 19 umfasst außerdem einen um den Königszapfen 12 schwenkbaren Ausrichtkeil 13 (siehe Figur 2), dessen äußere Form komplementär zu der Geometrie der Einfahröffnung 10 ausgebildet ist. Auf der Unterseite des Ausrichtkeils 13 befindet sich eine zweite Steckerhälfte 4, wie ebenfalls besonders gut in der Figur 2 zu erkennen ist. Beide Steckerhälften 3, 4 werden beim Ankuppeln des Königszapfens 12 an die Sattelkupplung 11 zusammengeführt. Auch die zweite Steckerhälfte 4 weist Kontakte 9 auf, die bereits vor der Kontaktierung mit der ersten Steckerhälfte 3 den darin befindlichen Kontakten 9 gegenüberstehen.

Auf der Rückseite des Ausrichtkeils 13 treten die Versorgungsleitungen heraus, zu denen die pneumatische Bremssignalleitung 18a und die Steuerleitung 18b des Bremskreislaufs 5 gehören.

Die pneumatische Bremssignalleitung 18a erstreckt sich auf dem Sattelauflieger 2 von dem Ausrichtkeil 13 bis zu den Bremsen des jeweiligen Rades 16. Innerhalb der pneumatischen Bremssignalleitung 18a wird der pneumatische Druck mittels eines Drucksensors 6 erfasst, welcher an ein Anhängersteuergerät 7 des elektronischen Bremssystems (EBS) angeschlossen ist.

Die Steuerleitung 18b verläuft von dem Ausrichtkeil 13 ebenfalls zu dem Anhängersteuergerät 7. Über einen weiteren Leitungszweig kann außerdem von dem Anhängersteuergerät 7 ein Bremsventil 17 angesteuert sein.

Mit dem Ankuppeln des Sattelaufliegers 2 an das Zugfahrzeug 1 sind auch die erste und zweite Steckerhälfte 3, 4 des Kupplungssystems 19 miteinander verbunden. Die ordnungsgemäße Überwachung erfolgt anstatt durch eine Sichtkontrolle des Fahrers nunmehr systemimmanent, indem der nach der Kontaktierung in der pneumatischen Bremssignalleitung 18a vorherrschende Druck von dem darin angeordneten Drucksensor 6 gemessen und innerhalb des Anhängersteuergeräts 7 in den Datenbus eingespeist wird. Nur wenn eine ordnungsgemäße Kontaktierung der ersten Steckerhälfte 3 mit der zweiten Steckerhälfte 4 vorliegt, findet ein Druckaufbau innerhalb der pneumatischen Bremssignalleitung 18a statt und auch nur dann findet eine Signalübertragung des Datenbus über die erste und zweite Steckerhälfte 3, 4 statt, die vom Steuergerät 8 des Zugfahrzeugs 1 erkannt wird.

Sofern das Steuergerät 8 auf eine ordnungsgemäße Kontaktierung der Steckerhälften 3, 4 schließt, wird dieses dem Fahrer über die Signaleinrichtung 15 innerhalb des Fahrerhauses 14 angezeigt.

Gegenüber einer optischen Kontrolle des Verbindungszustandes der ersten und zweiten Steckerhälfte 3, 4 bietet das erfindungsgemäße System den Vorteil, dass gleichzeitig die Funktion des Bremskreislaufs 5 geprüft wird, da andernfalls kein positives Signal über den Datenbus zu dem Steuergerät 8 des Zugfahrzeugs 1 übertragen werden würde.

### Bezugszeichenliste

- 1: Zugfahrzeug
- 2: Anhängerfahrzeug, Sattelauflieger
- 3: erste Steckerhälfte
- 4: zweite Steckerhälfte
- 5: pneumatischer Kreis, Bremskreislauf
- 6: Drucksensor
- 7: Anhängersteuergerät
- 8: Steuergerät Zugfahrzeug
- 9: Kontakte
- 10: Einfahröffnung
- 11: Sattelkupplung
- 12: Königszapfen
- 13: Ausrichtkeil
- 14: Fahrerhaus
- 15: Signaleinrichtung
- 16: Rad Auflieger
- 17: Bremsventil
- 18a: pneumatische Bremssignalleitung
- 18b: Steuerleitung
- 19: Kupplungssystem
- 20: Kompressor

## Patentansprüche

1. System zum Erkennen des Kontaktierungszustandes zwischen einer ersten Steckerhälfte (3) eines Zugfahrzeugs (1) und einer zweiten Steckerhälfte (4) eines Anhängerfahrzeugs (2), bei dem das Anhängerfahrzeug (2) mindestens einen pneumatischen Bremskreis (5) und einen darin angeordneten Bremsdrucksensor (6) aufweist, welcher dem Zugfahrzeug (1) mittels eines Anhängersteuergerätes (7) ein dem_Druckniveau entsprechendes elektronisches Bremsdrucksignal bereitstellt, wobei an dem Zugfahrzeug (1) ein mit dem Anhängersteuergerät (7) verbundenes Steuergerät (8) angeordnet ist, welches das elektronische Bremsdrucksignal verarbeitet, das Anhängersteuergerät (7) das elektronische Bremsdrucksignal des Bremsdrucksensors (6) auf einen Datenbus stellt und der Datenbus dieses Bremsdrucksignal an das Zugfahrzeug (1) überträgt und das über den Datenbus übertragene elektronische Bremsdrucksignal von dem zugfahrzeugseitigen Steuergerät (8) am Zugfahrzeug (1) abgreifbar ist,
**dadurch gekennzeichnet,**
**dass** an dem Zugfahrzeug (1) eine Signaleinrichtung (15) angeordnet ist, die dem Fahrer den ordnungsgemäßen Kontaktierungszustand der ersten und zweiten Steckerhälfte (3, 4) anzeigt,
**dass** das Steuergerät (8) des Zugfahrzeugs (1) so ausgestaltet ist, daß das eingehende elektronische Bremsdrucksignal des Anhängerteuergerätes (7) mit einem eingespeisten Bremsdrucksignal Verglichen wird, wobei der Druckaufbau des Bremsdrucks, der Datenbus mit den zugehörigen Steuergeräten (7, 8) und die ordnungsgemäße Kontaktierung der Kontakte des Datenbusses in den Steckerhälften (3, 4) in die Überprüfung eingeschlossen werden, und
**dass** jede Steckerhälfte (3, 4) Kontakte (9) zur Übertragung des Datenbus-Signals und zur Druckluftübertragung aufweist.

2. System nach Anspruch 1, **dadurch gekennzeichnet, dass** das Anhängersteuergerät (7) und/oder das zugfahrzeugseitige Steuergerät (8) ein Bauelement des elektronischen Bremssystems (EBS) sind.

3. System nach Anspruch 1 oder 2, **dadurch gekennzeichnet, dass** die erste Steckerhälfte (3) unmittelbar unterhalb der Einfahröffnung (10) einer Sattelkupplung (11) angeordnet ist.

4. System nach einem der Ansprüche 1 bis 3, **dadurch gekennzeichnet, dass** die zweite Steckerhälfte (4) an einem schwenkbar um einen Königszapfen (12) gelagerten Ausrichtkeil (13) angeordnet ist, dessen äußere Kontur komplementär zu der Einfahröffnung (10) einer Sattelkupplung (11) ausgebildet ist.

5. System nach einem der Ansprüche 1 bis 4, **dadurch gekennzeichnet, dass** die Signaleinrichtung (15) innerhalb des Fahrerhauses angeordnet ist.

## Claims

1. System for detecting the connection status between a first connector half (3) of a towing vehicle (1) and a second connector half (4) of a trailer vehicle (2), in which the trailer vehicle (2) has at least one pneumatic brake circuit (5) and, arranged therein, a brake pressure sensor (6) which supplies to the towing vehicle (1) by means of a trailer control device (7) an electronic brake pressure signal corresponding to the pressure level, wherein there is arranged on the towing vehicle (1) a control device (8) which is connected to the trailer control device (7) and processes the electronic brake pressure signal, the trailer control device (7) places the electronic brake pressure signal of the brake pressure sensor (6) on a data bus, and the data bus transmits the brake pressure signal to the towing vehicle (1), and the electronic brake pressure signal transmitted by way of the data bus can be read at the towing vehicle (1) by the control device (8) on the towing vehicle,
**characterised in that**
there is arranged on the towing vehicle (1) a signalling device (15) which indicates to the driver the correct connection status of the first and second connector halves (3, 4), **in that** the control device (8) of the towing vehicle (1) is so equipped that the incoming electronic brake pressure signal of the trailer control device (7) is compared with a stored brake pressure signal, wherein the check includes the pressure build-up of the brake pressure, the data bus with the associated control devices (7, 8), and the correct connection of the contacts of the data bus in the connector halves (3, 4), and
**in that** each connector half (3, 4) has contacts (9) for transmitting the data bus signal and for the transfer of compressed air.

2. System according to claim 1, **characterised in that** the trailer control device (7) and/or the control device (8) on the towing vehicle is/are a structural element of the electronic braking system (EBS).

3. System according to claim 1 or 2, **characterised in that** the first connector half (3) is arranged immediately beneath the entry opening (10) of a fifth wheel coupling (11).

4. System according to any one of claims 1 to 3, **characterised in that** the second connector half (4) is arranged on an alignment wedge (13) that is mounted to be pivotable about a kingpin (12) and the outer contour of which is complementary to the entry opening (10) of a fifth wheel coupling (11).

5. System according to any one of claims 1 to 4, **characterised in that** the signalling device (15) is arranged inside the driver's cab.

## Revendications

1. Système de détection de l'état de connexion entre une première moitié de connecteur (3) d'un véhicule tracteur (1) et une deuxième moitié de connecteur (4) d'un véhicule remorqué (2), lequel véhicule remorqué (2) présente au moins un circuit de freinage pneumatique (5) et un capteur de pression de freinage (6) disposé dans celui-ci, lequel fournit au véhicule tracteur (1), au moyen d'un appareil de commande de remorque (7), un signal électronique de pression de freinage correspondant au niveau de pression, un appareil de commande (8) relié à l'appareil de commande de remorque (7) étant disposé sur le véhicule tracteur (1), lequel traite le signal électronique de pression de freinage, l'appareil de commande de remorque (7) mettant le signal électronique de pression de freinage du capteur de pression de freinage (6) sur un bus de données et le bus de données transmettant ce signal de pression de freinage au véhicule tracteur (1) et le signal électronique de pression de freinage transmis sur le bus de données pouvant être prélevé sur le véhicule tracteur (1) par l'appareil de commande (8) côté véhicule tracteur,
**caractérisé en ce**
**que** sur le véhicule tracteur (1) est disposé un dispositif de signalisation (15) qui indique au conducteur l'état de connexion correct des première et deuxième moitiés de connecteur (3, 4),
**que** l'appareil de commande (8) du véhicule tracteur (1) est équipé de façon que le signal électronique de pression de freinage arrivant de l'appareil de commande de remorque (7) soit comparé avec un signal de pression de freinage injecté, l'augmentation de la pression de freinage, le bus de données avec les appareils de commande associés (7, 8) et la connexion correcte des contacts du bus de données dans les moitiés de connecteur (3, 4) étant inclus dans la vérification, et
**que** chaque moitié de connecteur (3, 4) présente des contacts (9) pour la transmission du signal de bus de données et pour la transmission d'air comprimé.

2. Système selon la revendication 1, **caractérisé en ce que** l'appareil de commande de remorque (7) et/ou l'appareil de commande (8) côté véhicule tracteur sont un composant du système de freinage électronique (EBS).

3. Système selon la revendication 1 ou 2, **caractérisé en ce que** la première moitié de connecteur (3) est disposée immédiatement sous l'ouverture de positionnement (10) d'une sellette d'attelage (11).

4. Système selon une des revendications 1 à 3, **caractérisé en ce que** la deuxième moitié de connecteur (4) est disposée sur un cône d'alignement (13) qui est monté pivotant autour d'un pivot d'attelage (12) et dont le contour extérieur est conformé de façon complémentaire à l'ouverture de positionnement (10) d'une sellette d'attelage (11).

5. Système selon une des revendications 1 à 4, **caractérisé en ce que** le dispositif de signalisation (15) est disposé à l'intérieur de la cabine de conduite.
